# EUROPEAN PATENT APPLICATION

(11) **EP 4 703 913 A1**
(43) Date of publication of application: **04.03.2026**
(21) Application number: 24197504.4
(22) Date of filing: 30.08.2024
(51) Int. Cl.: G06F 16/906, G06N 3/045, G06N 3/092

(54) **USING GENERATIVE-AI AND REINFORCEMENT LEARNING TO AUTOMATICALLY GENERATE USER TASKS**

(71) Applicant: Siemens Aktiengesellschaft, 80333 München (DE)
(72) Inventor: Boulila, Naoufel, 80809 München (DE); Röse, Kerstin, 91056 Erlangen (DE)
(74) Representative: Siemens Patent Attorneys

(57) **Abstract**

The present invention relates to a method of creating a new user task (3), the method comprises the following steps:
- providing a raw user task (4) (high-level task, goal),
- splitting the raw user task (4) into tokens (2),
- creating the new user task (3) by a generative artificial intelligence unit (6) on the basis of the tokens (2).

## Description

The present invention relates to a method of creating a new user task. Furthermore, the present invention relates to a respective device, a computer-program, and a computer-readable medium.

In the present document some terms are used, which are defined as follows:
User Tasks : user tasks are well-defined steps a user needs to complete in order to achieve a specific goal.
Generative-Al : Generative Al is a type of artificial intelligence technology that can produce various types of content, including text, imagery, audio and synthetic data.
LLMs : (Large Language Models) are a type of deep learning algorithm techniques using large data sets to understand, summarize, generate and predict new content.
Reinforcement learning ( RL ): is a machine learning training method based on rewarding desired behaviors and punishing undesired ones (learn through trial and error)
Logits: are the unnormalized outputs (raw real numbers) produced from neural networks. These values reflect the model's confidence in its predictions.

The softmax function converts the logits into a probability distribution over the possible output classes.

Self-attention is a mechanism used in natural language processing (NLP) to capture dependencies and relationships within input sequences. It allows the model to identify and weigh the importance of different elements of the input sequence by attending to itself. Word embedding as an assignment of scores to the words

To be able to follow the pace of today's lighting fast changing market and user needs, applications, products, and services have to be developed swiftly and systematically. In the era of Generative-Al, many development artifacts such as specifications, design, code etc. can be generated and eventually adapted depending on the current needs.

Within the UX field (user experience), many repetitive activities such as user analysis and design can be automated to some extent. User tasks in particular can be generic or context dependent. In both cases, and having enough data, both types of user tasks can be generated as well. Thereby increasing the potential for reuse within the same application and across products and systems (similar to component-based developments from the software engineering field).

Component-based development is a well-established concept within the software engineering community. The aim is to create self-contained and reusable software components that can be used as in plug-and-play for various environments and solutions, at compile time or at run-time (on the fly, while the application is running). Over the last decades, software engineers used to design and develop these components manually causing a lot of strain and overhead.

In the UX field, similar efforts are spent on analyzing and trying to understand the user needs, their goals, and the tasks leading to achieve those goals. Creating and deriving user tasks from within existing specific or generic user tasks is still challenging. The reuse potential is still limited and is time-consuming and cost-intensive in particular for small-scale and limited budget projects.

The object of the present invention is to increase the efficiency of generating user tasks.

This object is solved by a method and a device according to the independent claims. Further favourable developments are defined in the subclaims.

Thus, there is provided a method of creating a new user task. The method may be computer-implemented. It comprises several steps.

A first step relates to providing one or more raw user tasks. A raw user task (my be high-level task or a goal. This means that the raw user task (also called raw task) is not strongly subdivided and rather indicates the final result.

A further step of the method comprises splitting the raw task(s) into tokens. This splitting may be performed by a tokenizer. Such tokens are typically used for feeding LLMs. In the present field of user tasks the tokens may also be called atomic tasks or atomic subtasks. For instance, if the user task relates to onboarding of devices to a system, a token may relate to authentication, form creation, data insertion et cetera.

In a further step of the inventive method the new user task is created by a generative artificial intelligence unit on the basis of the tokens. Thus, the tokens are used to artificially create a new user task. Thus, the creation of the new user task is performed more comfortably. The intervention of a user can be dispensed with for the task creation. As defined above, user tasks are sequences of steps that must be completed together with a user. For example, these steps of a user task may include a user interaction et cetera.

According to one embodiment at least one further new user task (briefly also called new task) is created by the generative artificial intelligence unit on the basis of the tokens. Preferably, a plurality of new tasks is created by the generative artificial intelligence unit. Thus, the several tasks can be presented to a user for his or her choice.

In a further embodiment the generative artificial intelligence unit provides a specific probability value for each of the new tasks. This means that an individual probability value is assigned to each new task. The probability values may be used to make a selection. For example, only those new tasks are presented to the user which have the highest probability value. Specifically, only those new tasks of all new tasks may be presented, the probability values of which are higher than a specific threshold value. Thus, the threshold value can be used to control the quality of presented new tasks.

According to a further embodiment the generative artificial intelligence unit comprises a large language model. The large language model has the advantage that the automatically created new task can be formulated in natural language. Alternatively, also large multimodal models can be used for generating the new tasks. In this case multimodal inputs (texts, videos, audios et cetera) can be used as input data.

Furthermore, there may be provided an embodiment, wherein the tokens represent subtasks performable by a user. This means that each token may represent a small unit of action to be performed by or with the user. For instance, a subtask may be that the user has to insert a number into a user interface. Another subtask may be to provide a device which has to be onboarded. Each small action of a user may be defined as subtask.

In another embodiment each of the user tasks is a predefined sequence or number of steps a user needs to complete in order to achieve a specific goal. This means that the user task is divided into a sequence of steps (subtasks) and the sequence aims at achieving the specific goal. This may include that the steps must be carried out in a specific sequence. Otherwise, the target or goal may be missed.

According to a further embodiment the plural new tasks are used for reinforcement learning to control the generative artificial intelligence unit such that further new tasks are generated by the generative artificial intelligence unit, wherein a medium quality value of the further new tasks is higher than a respective medium quality value of the new tasks. In other words, the reinforcement learning is used to optimize the generation of the user tasks. The reinforcement learning requires a feedback of the generated user tasks. Thus, the generated user tasks are used as basis for further input data.

In a specific embodiment related to the reinforcement learning the plural new tasks are annotated and subjected to a reward model, the output of which serves as input for the reinforcement learning. This means that the new tasks generated by the artificial intelligence unit are annotated e. g. with respect to usability and the reward model assigns high rewards to those new tasks which have high usability. The respective rewards are used for the reinforcement learning.

In a further embodiment the plural new tasks are annotated by a machine or a user. Thus, the annotation can be performed automatically or manually. The automatic annotation can be performed by considering value regions. The manual annotation may be used to introduce additional information into the learning process.

According to another embodiment the plural new tasks are filtered on the basis of context information. For instance, if the user tasks are created for the field of onboarding devices, a new user task of "patching" may be meaningful. Another new task of "selecting a color" may be irrelevant in the context of onboarding. Thus, the context information may be used for a kind of "self-attention" when generating the new tasks.

In one aspect of the present invention there is provided a method of developing or manufacturing a product, customizing a system, maintaining an object or varying an object by performing a user task created according to the above-described method. Thus, a (new) product can be developed or manufactured when following the new user tasks created automatically by the generative artificial intelligence unit. In another example a building automation system may be customized by one or more users which carry out the new user tasks. Furthermore, an object may be maintained by the created new user tasks, which may include for a first user to care for the product, for a second user to answer questions of a customer, and for a third user to check whether enough spare parts are ordered. According to a further example an object may be varied by performing the new user tasks. Such variation of the object may comprise adding or removing of parts of the object.

The above object may also be solved by a device for creating a new user task, the device comprises:
- a memory unit for providing a raw user task,
- a tokenizer unit for splitting the raw user task into tokens and
- a generative artificial intelligence unit for creating the new user task on the basis of the tokens.

The memory unit may comprise storage media as well as a processor element.

The tokenizer unit may comprise a computer, a processor, memory elements, and the like. The generative artificial intelligence unit may also comprise a processor and memory elements. The complete device may be realized with a computer.

The advantages and variations described above in connection with the inventive method also apply to the inventive device. The method features may be regarded as functional features of the device.

In a further aspect there is provided a computer program comprising instructions, which, when the program is executed by the above device, cause the device to carry out the method described above.

Furthermore, there may be provided a computer-readable medium comprising instructions which, when the program is executed by the above device, cause the device to carry out the method as described above.

The present invention will now be described in more detail in connection with the attached drawings showing in:
FIG 1 a flow chart of breaking down tasks and creating new once;
FIG 2 a specific framework solution for generating new user tasks;
FIG 3 reinforcement learning coupled with the framework of FIG 2; and
FIG 4 an example of a generative Al-based task generation.

The following embodiments represent preferred examples of the present invention.

To be able to follow the pace of today's lighting fast changing market and user needs, applications, products, and services have to be developed swiftly and systematically. In the era of Generative-Al, many development artifacts such as specifications, design, code etc. can be generated and eventually adapted depending on the current needs.

Within the UX field, many repetitive activities such as user analysis and design can be automated to some extent. User tasks in particular can be generic or context dependent. In both cases, and having enough data, both types of user tasks can be generated as well. Thereby increasing the potential for reuse within the same application and across products and systems (similar to component-based developments from the software engineering field).

The present invention allows for an automatic user task generation and (optionally) reuse, based on a large set of data. As a byproduct, the solution may identify and create new insights and capabilities which can be used to enhance the overall user experience.

The proposed solution consists in automatically creating completely new user tasks or deriving user-tasks from existing ones, using a Generative-Al component and (optionally) a reinforcement learning algorithm to even provide more accuracy to the generated results.

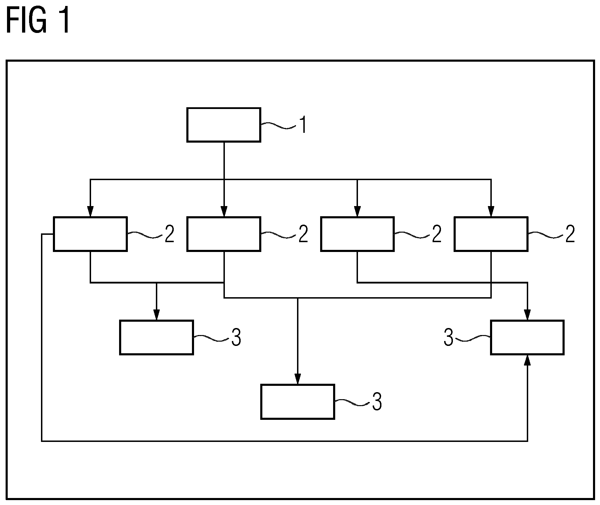

A flow chart of generating new tasks is shown in FIG 1. A task 1 is broken down into (atomic) subtasks 2. One or more subtasks 2 are used to create new tasks 3. Specifically, related subtasks 2 can be combined to derive the new tasks 3.

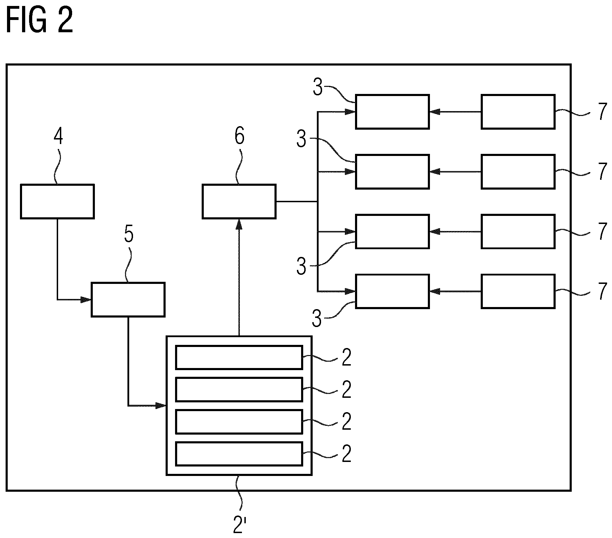

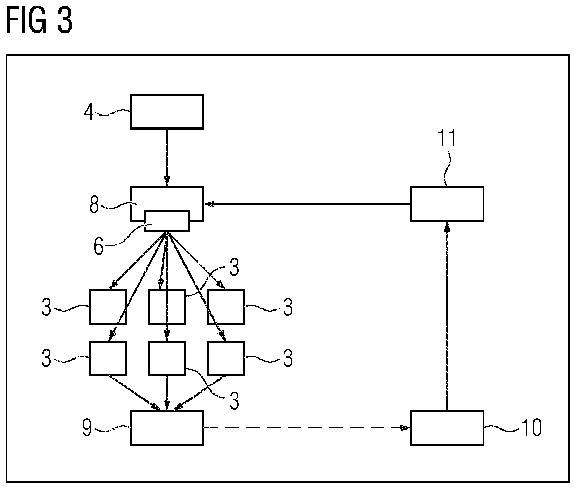

A framework solution according to one embodiment of the invention (see FIGs 2 and 3) is, based on large data sets from various usage data applications, products, and systems, among others including the following types of data: user interactions, user behavior, user preferences, happy path and exceptions.

A respective method of generating one or more new tasks can be based on a transformation-based generative-Al model. Tasks shall form the input and the output results. Massive amounts of data can be analyzed to uncover insights and possibly predict future actions allowing UX designers (or Al-based design engines for UX) to create interfaces that are intuitive, trustworthy, error-tolerant, and user-friendly with a short learning-curve. The predictive capability contributes to the improvement of the overall user experience by anticipating user needs and therefore their actions.

These results are then used to create and derive proper user tasks that designers or intelligent machines can use to iteratively develop prototypes and final products. No longer users have to be observed while conducting their actions. The generative Al-unit rather automatically creates new or reusable tasks which are instantly available. Specifically LLMs may be used to generate new tasks from existing and derived tasks based on: token-atomic-tasks (subtasks), calculated probabilities and semantic rules. The resulting new tasks should have meaning within the general application and usage context.

The embodiment of FIG 2 shows a concrete example of generating new user tasks by a generative AI unit. One or more raw tasks (briefly called "tasks") 4 may be provided as input. The raw tasks can be formulated in natural language as simple goals. They are input into a tokenizer 5. It splits the raw task(s) 4 into atomic tasks or subtasks 2. The single atomic tasks represent tokens. A generative artificial intelligence unit 6 (e. g. LLM) receives the subtasks 2 as input.

The generative AI unit 6 includes an encoder and a decoder for example. Furthermore, the generative AI unit 6 may be provided with context information in order to realize "self-attention". This means that the output result of the generative AI unit 6 must arise from the context. Thus, the self-attention is a certain kind of context filter.

The generative AI unit 6 generates a plurality of new tasks 3. Additionally, the generative AI unit 6 may provide a probability 7 for each new task 3.

The input of the tokenizer represented by the plurality of tasks 4 may also include other data as described above: user interaction(s), user behaviour, user preferences, happy path, exceptions et cetera.

To further improve the accuracy of the generated new tasks 3, a reinforcement learning AI model can be used such as shown in FIG 3. Every resulting new task 3 (with a given probability) will be rewarded or punished according to the success rate as perceived by a human or a counter-part machine.

In the flow chart of FIG 3 the generation process 8 is simply depicted as rectangle including the generative AI unit 6 (e. g. LLM). This generation process 8 generates the new tasks 3 from the raw task(s) 4. All of the new tasks 3 are annotated by an annotator 9. A reward model 10 prepares rewards as a function of the annotations of the annotator 9. The new tasks 3 together with the respective rewards are provided to a reinforcement learning model 11. The reinforcement learning model 11 is another machine learning algorithm that provides capabilities to increase the quality of the generated new tasks 3. Human beings can be actively involved as annotators in the reward process. Alternatively, a trained counterpart Al-machine can be involved in the reward process that ensures the intended quality. The output of the reinforcement learning model 11 is input to the generation process 8. This results in a feedback loop for optimizing the generation process.

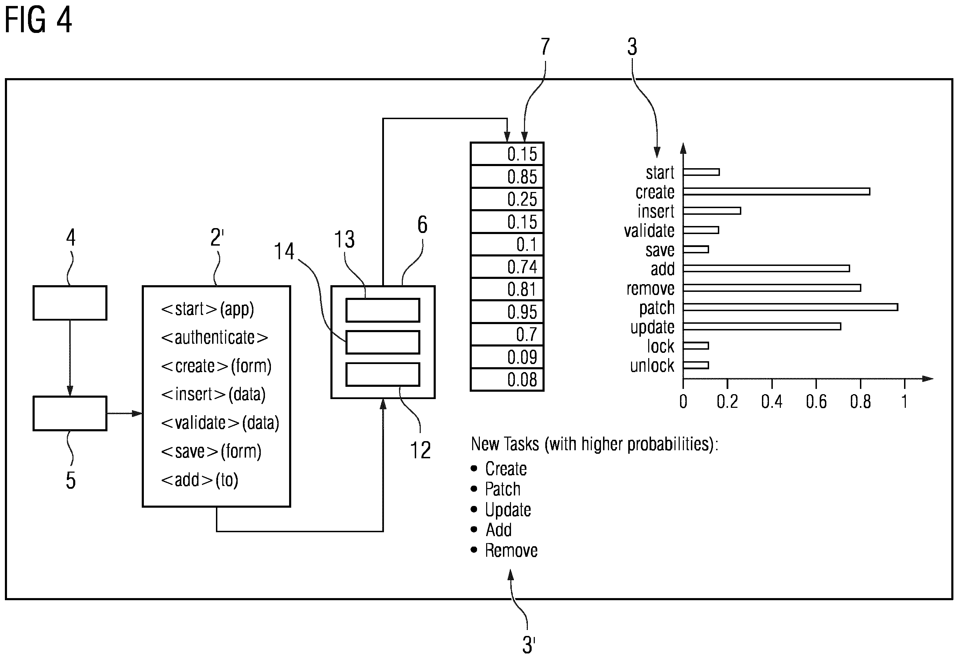

FIG 4 shows a concrete example of the generation method for new tasks. In the present example the raw task 4 is that the user wants to onboard a new device. This raw task 4 can be formulated in natural language and may include a goal and/or high-level task description. The tokenizer 5 splits the raw task 4 into a set of tokens 2' comprising a plurality of tokens (also called atomic tasks or subtasks 2). In the present example the tokens are "start", "authenticate", "create", "insert", "validate", "save", and "add". The set of subtasks 2' is input to the generative AI unit 6 (e. g. LLM). The generative AI unit 6 may comprise an encoder 12 and a decoder 13. It may be trained in a specific context 14.

The generative AI unit 6 creates a plurality of new tasks 3 together with corresponding probabilities 7. In the present example the new tasks are "start", "create", "insert", "validate", "save", "add", "remove", "patch", "update", "lock", and "unlock". A filter may select those new tasks 3 with the highest probabilities. In the present example the selected new tasks 3' are "create", "patch", "update", "add", and "remove", the probability of which is higher than 0,5 for example.

The generative AI unit 6 may use self-attention to capture the relationships between the various atomic tasks 2. The calculated probability 7 reveals how likely a given task is relevant to the current application (context). These probabilities 7 are calculated based on a pre-trained model within the context of device management.

The above examples show how the inventive method and the inventive device can be realized.

## Claims

1. Method of creating a new user task (3), the method comprises the following steps:
- providing a raw user task (4),
- splitting the raw user task (4) into tokens (2),
- creating the new user task (3) by a generative artificial intelligence unit (6) on the basis of the tokens (2).

2. Method according to claim 1, wherein at least one further new task (3) is created by the generative artificial intelligence unit (6) on the basis of the tokens (2).

3. Method according to claim 2, wherein the generative artificial intelligence unit (6) provides a specific probability value (7) for each of the new user tasks (3).

4. Method according to claim 3, wherein only those new user tasks (3) of all new user tasks are presented, the probability values (7) of which are higher than a specific threshold value.

5. Method according to one of the preceding claims, wherein the generative artificial intelligence unit (6) comprises a large language model or a large multimodal model.

6. Method according to one of the preceding claims, wherein the tokens (2) represent subtasks performable by a user.

7. Method according to one of the preceding claims, wherein each of the new user tasks (3) is a predefined sequence or number of steps a user needs to complete in order to achieve a specific goal.

8. Method according to one of the claims 2 to 7, wherein the plural new user tasks (3) are used for reinforcement learning to control the generative artificial intelligence unit (6) such that further new user tasks are generated by the generative artificial intelligence unit (6), wherein a medium quality value of the further new user tasks is higher than a respective medium quality value of the new user tasks (3).

9. Method according to claim 8, wherein the plural new user tasks (3) are annotated and subjected to a reward model (10), the output of which serves as input for the reinforcement learning.

10. Method according to claim 9, wherein the plural new user tasks (3) are annotated by a machine or a user.

11. Method according to one of the claims 2 to 10, wherein the plural new user tasks (3) are filtered on the basis of context information.

12. Method of developing or manufacturing a product, customizing a system, maintaining an object or varying an object by performing a new user task (3) created according to one of the preceding claims.

13. Device for creating a new user task (3), the device comprises:
- a memory unit for providing a raw user task (4),
- a tokenizer unit (5) for splitting the raw user task (4) into tokens (2) and
- a generative artificial intelligence unit (6) for creating the new user task (3) on the basis of the tokens (2).

14. Computer program comprising instructions which, when the program is executed by a device according to claim 13, cause the device to carry out the method according to one of the claims 1 to 12.

15. Computer-readable medium comprising instructions which, when the program is executed by a device according to claim 13, cause the device to carry out the method according to one of the claims 1 to 12.
